# EUROPEAN PATENT APPLICATION

(11) **EP 1 978 501 A2**
(43) Date of publication of application: **08.10.2008**
(21) Application number: 08151868.0
(22) Date of filing: 25.02.2008
(51) Int. Cl.: G09F 27/00, G09F 15/00, G06Q 30/00

(54) **Interactive apparatus and method for broadcasting information**

(30) Priority: 28.02.2007 IT UD20070045
(71) Applicant: Vanossi, Francesco, 23024 Madesimo (SO) (IT)
(72) Inventor: Vanossi, Francesco, 23024, Madesimo (SO) (IT); Vanossi, Marco, 11661-310, Caraguatatuba - SP (BR)
(74) Representative: Petraz, Gilberto Luigi

(57) **Abstract**

Apparatus (10) and method for broadcasting information relating to a determinate geographical area or environment, comprising a bearing structure (11) on which at least an information panel (12) is mounted, provided with at least a map (16, 17) showing the geographical area or environment, and a plurality of information sectors (19, 20, 21, 29) through which different information relating to determinate places of interest indicated on the map (16, 17) is broadcast in graphical and/or written and/or image form. The apparatus (10) also comprises a processing unit (15) mounted on the bearing structure (11) and connected both to the information sectors (19, 20, 21, 29), and also to a network (28) of processors, so as to be able to receive from the network (28) a plurality of data relating to the places of interest, on each occasion shown and/or showable on the map (16, 17) and to process said data in order to modify, in interactive mode, on each occasion, the information broadcast through the information sectors (19, 20, 21, 29) according to the data received.

## Description

### FIELD OF THE INVENTION

The present invention concerns an interactive apparatus and method for broadcasting information relating to a determinate geographical area, such as for example a nature park, a zoo, a tourist area or other, or a determinate closed environment, such as for example a museum, a fair, an office, a hospital or other, where said apparatus is installed. In particular, the present invention concerns an information interactive apparatus which allows the user to interact with the information available, so as to be able to personalize the choice of said information and identify specific places of interest, possibly verifying in real time the actual state of efficiency thereof, and identifying the instantaneous availability of services and/or goods.

An apparatus and a method on which the preambles of the main claims are based are disclosed in US 2004/0249686 A1.

### BACKGROUND OF THE INVENTION

Apparatuses for broadcasting information are known, normally installed at the entrance to a determinate geographical area, such as for example a nature park, zoo, tourist zone or other, or a determinate closed environment, such as for example a museum, a fair, an office, a hospital or other. Known apparatuses generally allow to focus on the map of said geographical area, or closed environment, and visually identify particular sites or routes of interest, or specific general information, for example concerning the weather forecast for a zone, the potential capacity of an auditorium or suchlike.

Known apparatuses normally consist of an information panel on which a map is positioned showing the geographical area or environment in which the apparatus is installed.

Specific information sectors are also normally provided on the panel, disposed next to and/or inside the map, which include a plurality of writings, drawings, photographs, films or other, either in written form or by means of a display, which indicate references or carry announcements relating to determinate places of interest or advertising proposals.

However, known apparatuses broadcast the information in a substantially static manner, that is, all the information made available to the user is pre-set or programmed periodically, and cannot be examined more deeply in an interactive mode by the user who perceives it.

As a consequence of this disadvantage, information is broadcast which is not perfectly up-to-date, and sometimes not very reliable, especially with regard to dynamic information, such as for example actual weather conditions, availability of places in a reception structure, or the current state of functioning of a plant, or other.

Purpose of the present invention is to achieve an interactive apparatus for broadcasting information which allows to provide up-to-date information, also in real time, and which allows a user to examine more deeply the information supplied, in a specific and personalized way, thus personalizing his/her search for services and/or goods.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, an apparatus for broadcasting information according to the present invention is installed in a determinate geographical area or environment, and substantially comprises a bearing structure and at least an information panel on which at least a map depicting the geographical area or environment in which the apparatus is installed is mounted.

The panel comprises a plurality of information sectors, provided at the side of the map and/or inside it, in which different information relating to determinate places of interest indicated on the map is broadcast in graphical and/or written and/or image form.

According to a characteristic feature of the present invention, the apparatus for broadcasting information also comprises a processing unit mounted on the bearing structure and connected both to the information sectors and also to a network of processors, so as to be able to receive from the network, in a bidirectional way, a plurality of data relating to the places of interest shown and/or showable on each occasion on the map, and to process said data in order to modify, on each occasion, the information broadcast through the information sectors, according to the data received and relating to the places of interest and therefore according to their actual state of efficiency and instantaneous availability of the services and/or goods.

In this way, the user consulting the apparatus for broadcasting information according to the present invention not only obtains static information such as for example the map of the geographical area, but is also informed, substantially in real time, of the actual state of each specific place of interest, for example the weather conditions, reception availability, costs, services available or other.

Moreover, since the processing unit is connected through the information network to other processors, for example through internet or other suitable net, also local, the apparatus for broadcasting information according to the present invention allows the user to search for and select specific information relating to his/her own place of interest, with the possibility of making bookings and/or purchases, and of identifying in real time the hotel capacity of a specific geographical zone or other locations he/she is interested in.

### BRIEF DESCRIPTION OF THE DRAWINGS

These and other characteristics of the present invention will become apparent from the following description of a preferential form of embodiment, given as a non-restrictive example with reference to the attached drawings wherein:

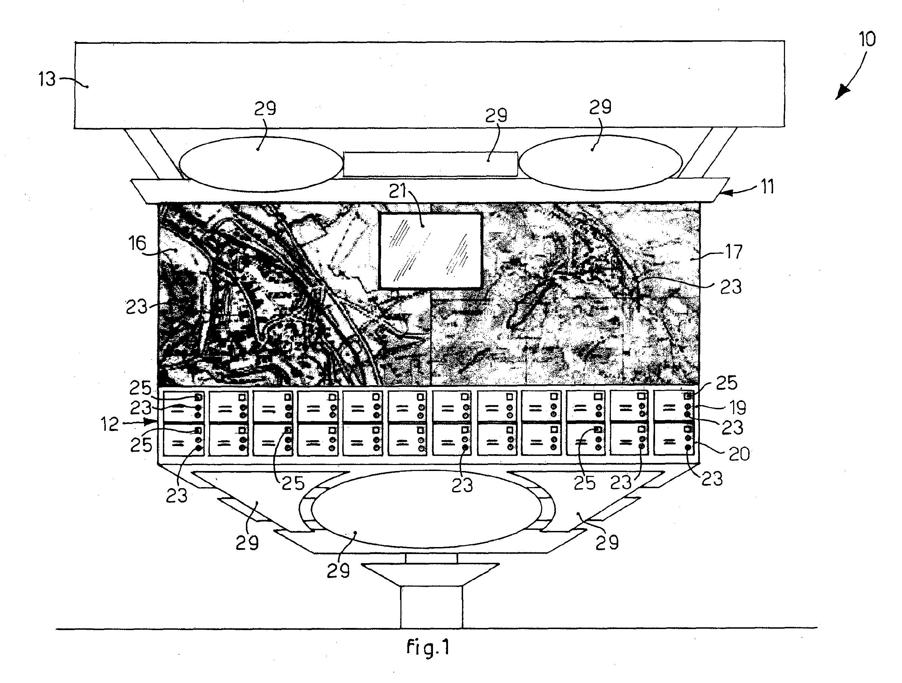

- fig. 1 is a schematic view of an apparatus for broadcasting information according to the present invention;

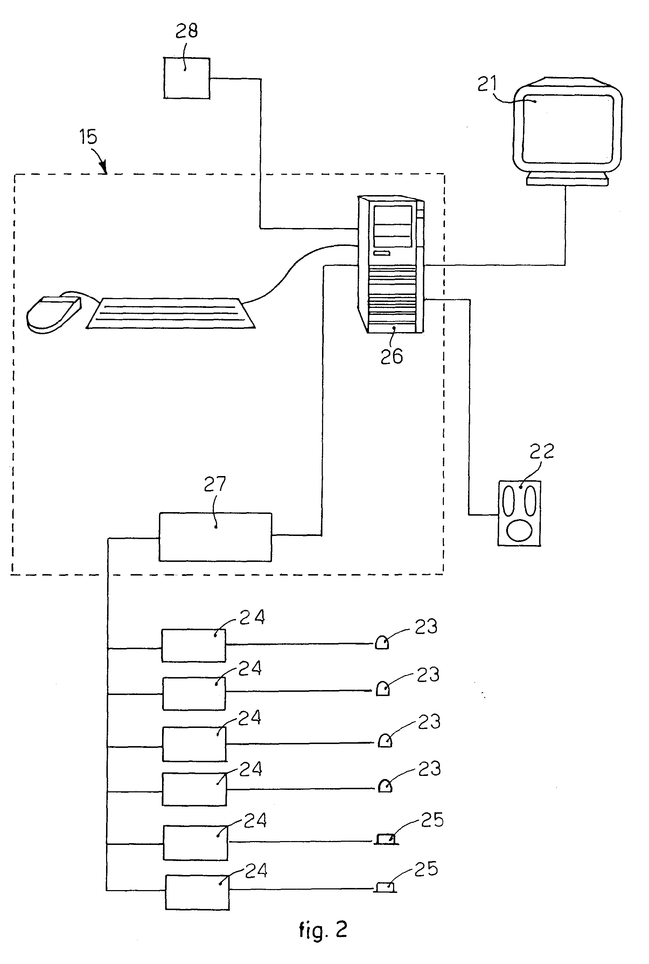

- fig. 2 is a block diagram of the apparatus for broadcasting information in fig. 1.

### DETAILED DESCRIPTION OF A PREFERENTIAL FORM OF EMBODIMENT

With reference to the attached drawings, an apparatus 10 for broadcasting information according to the present invention in this case is of the type mounted at the entrance to and/or along the route of a nature area, such as a mountain park, a skiing area or other.

In particular, the apparatus 10 comprises a bearing structure 11 made of wood, of a size that can be personalized according to needs, and on which an information panel 12 is mounted, made of stainless steel, and on which the information to be broadcast is reported.

It is clear that the bearing structure 11 and the information panel 12 can be made substantially of any rigid material, which can be chosen, on each occasion, according to the specific place of installation.

The apparatus 10 also comprises a processing unit 15 mounted on the bearing structure 11 and able to coordinate the broadcast of the information made available through the information panel 12.

The bearing structure 11 also comprises a cover element, or roof 13, made of copper, and able to protrude above the information panel 12 in order to protect it, and also the processing unit 15, from precipitation.

A plurality of information sectors are provided on the information panel 12 which, in this case, are divided in this way:
- a first map 16 showing, to scale, the topographical map of a town on which the main tourist points are shown, such as hotels, restaurants, bars and commercial areas and other, as will be explained in more detail hereafter;
- a second map 17 showing, on enlarged scale, the territory to which the town shown in the first map 16 belongs;
- a first box 19 showing the names of the reception structures, such as hotels, hostels, restaurants or other, present in the town and the territory shown in the first map 16 and the second map 17;
- a second box 20 showing the names of the sports and recreation structures such as ski lifts, skating rinks, discotheques, stadiums or other, present in the town and the territory shown in the first map 16 and the second map 17; and
- a monitor 21, advantageously LCD provided with protection against vandalism, through which images or information on the structures, territory and town shown in said maps 16 and 17 and in the boxes 19 and 20 are normally broadcast.

The information panel 12 also comprises a selection member 22, such as for example an industrial trackball, protected against vandalism, connected to the processing unit 15 and through which the user can interact with the information broadcast.

On the information panel 12 there is also a plurality of LED 23, strategically positioned on the maps 16 and 17 and the boxes 19 and 20, and commanded by means of specific electronic cards 24. Each LED 23 shows a specific point of interest for which it is possible to request information.

In this case, the electronic cards 24 associated with the LED 23 are of the RX Mosfet type and allow to communicate data through an RS485 protocol between the processing unit 15 and the optical state of the LED 23, and can possibly command them to switch on, off and/or adjust the luminous intensity thereof.

In fact, the LED 23 can assume different colors in order to have an immediate indication of a specific condition of the relative point of interest, for example the LED 23 can selectively turn green or red according to whether the relative structure is generically open or closed, or reduce in intensity during the night hours in order to reduce the optical-environmental impact of the apparatus 10.

Advantageously, at the side of the LED 23 disposed in the boxes 19 and 20 specific buttons 25 are provided, for the rapid selection of points of interest, also connected to relative electronic cards 24 and able to allow to select a specific structure indicated in the boxes 19 and 20.

In this case, the electronic cards 24 of the buttons 25 are transmission cards provided with digital inputs and are known by the initials TX, which convert the information from digital in RS485 protocol as emitted by the button 25 into RS232 protocol, so that the processing unit 15 can process the data and activate the specific functions programmed.

The processing unit 15 is connected both to the monitor 21, to the selection member 22, and also to the cards 24 of the LED 23 and the buttons 25.

The processing unit 15 substantially comprises an electronic processor 26 of industrial type able to function at temperatures comprised between about -20°C to about 70°C, and is positioned in a protective rack, not shown, and an electronic management card 27 which allows to coordinate the flow of data requesting and providing the information.

In particular, the electronic processor 26 is connected to a network 28 of electronic processors and/or IT apparatuses, such as for example web cams, weather stations, or suchlike, suitably positioned in the various places of interest. Advantageously, the network 28 is the Internet and connection is effected with an ADSL protocol.

The electronic card 27 substantially functions as a filter between the user's requests and the information available in the network 28, found by the electronic processor 26, possibly limiting and/or personalizing the display of data through the monitor 21.

In particular, the electronic card 27 is the CAN CARD type, and is connected through the electronic cards 24 to the relative LED 23 and buttons 25, and allows to read and transmit all the information to the panel 12, processed in turn by the electronic processor 26, also allowing to convert particular program strings to be displayed by means of the LED 23 and/or by the monitor 21, and to be commanded by appropriate buttons 25. In the same way, the electronic card 27 allows to open an Internet browser to display pre-defined sites, removing from the user the possibility of re-sizing and closing the display, and also to receive and transmit state messages on a serial line.

The electronic card 27 also functions as a communication Master and is able to send messages, for example requests concerning the state of the hotels, browser activation by supplying a code relating to the home page to be displayed, a request for the state of functioning of the electronic processor 26 and other, in order to render the connection "secure" so as to prevent possible interference from outside, and also to guarantee a correct and reliable connection to the network 28.

The electronic card 27 is also programmed to close the connection autonomously after a determinate period of non-use, and to transmit images or information films and/or advertising through the monitor 21.

The following is an example of a request for information with the apparatus 10 according to the present invention.

After identifying on one of the maps 16 or 17 the specific structure in which he/she is interested, the user presses the relative button 25 disposed in the first box 19 or the second box 20.

The processing unit 15 automatically commands connection to the relative home page of the structure selected and lights up the corresponding LED 23 on the maps 16 and 17, so as to visually identify the location.

At this point the user can select the desired information from the homepage through the selection member 22.

It is clear, however, that modifications and/or additions of parts may be made to the apparatus 10 as described heretofore, without departing from the field and scope of the present invention.

For example, it comes within the field of the present invention to provide that on the information panel 12 an acoustic member is also mounted, not shown here, able to broadcast instructions and information to the user vocally.

It also comes within the field of the present invention to provide that on the information panel 12 a printing member is mounted, able to give the user a printout summarizing the information requested.

According to a variant, fixed advertising spaces 29 are also provided on the information panel 12, given over to commercial activities and also tourist promotion of the territory shown in the second map 17.

According to another variant, the bearing structure 11 is suitable to support two different information panels 12.

It is also clear that, although the present invention has been described with reference to specific examples, a person of skill in the art shall certainly be able to achieve many other equivalent forms of apparatus for broadcasting information, having the characteristics as set forth in the claims and hence all coming within the field of protection defined thereby.

## Claims

1. Apparatus for broadcasting information relating to a determinate geographical area or environment, comprising a bearing structure (11) and at least an information panel (12) mounted on said bearing structure (11) and on which at least a map (16, 17) is mounted, showing said geographical area or said environment, and a plurality of information sectors (19, 20, 21, 29) through which different information relating to determinate places of interest indicated on said map (16, 17) is broadcast in graphical and/or written and/or image form, **characterized in that** it also comprises a processing unit (15) mounted on said bearing structure (11) and connected both to said information sectors (19, 20, 21, 29), and also to a network (28) of processors, so as to be able to receive from said network (28), in a bidirectional way, a plurality of data relating to said places of interest, on each occasion shown and/or showable on said map (16, 17), and to process said data in order to modify, in interactive mode, on each occasion, the information broadcast through said information sectors (19, 20, 21, 29) according to the data received, each of said place of interest being associated with a LED (23) commanded by means of specific electronic cards (24), each of said LED (23) being associated with a relative button (25) for the rapid selection of points of interest, also connected to relative electronic cards (24), wherein the electronic cards (24) of the buttons (25) are transmission cards provided with digital inputs which convert the information from digital into a transmission protocol, so that said processing unit (15) can process the data and activate the specific functions programmed.

2. Apparatus as in claim 1, **characterized in that** said network (28) of processors is an Internet or other suitable network, also local.

3. Apparatus as in claim 1 or 2, **characterized in that** said information panel (12) comprises a first map (16) showing said geographical area or environment, and a second map (17) showing said geographical area or environment on a different scale from said first map (16).

4. Apparatus as in any claim hereinbefore, **characterized in that** said information sectors comprise at least:
- a first box (19) which shows the names of a plurality of reception structures present in said geographical area or environment and in said at least one map (16, 17);
- a second box (20) which shows the names of a plurality of sports/recreation structures present in said geographical area or environment and in said at least one map (16, 17); and
- a monitor (21) through which images or information relating to said structures are normally broadcast.

5. Apparatus as in claim 4, **characterized in that** said information sectors also comprise a plurality of advertising spaces (29).

6. Apparatus as in any claim hereinbefore, **characterized in that** said processing unit (15) comprises an electronic processor (26) and a management electronic card (27) able to allow the coordination of the flow of data requesting and broadcasting information.

7. Apparatus as in claim 6, **characterized in that** said electronic processor (26) is connected through said network (28) to other electronic processors and/or information apparatuses.

8. Apparatus as in claim 6 or 7, **characterized in that** said electronic card (27) is able to filter the information available in said network (28) and found by said electronic processor (26) and the user's requests, and to open a network browser in order to display pre-defined sites, removing the possibility from the user of re-sizing and closing the display, and also to receive and transmit state messages on a serial line.

9. Apparatus as in claim 8, **characterized in that** said electronic card (27) is also able at least to send messages, activate browsers supplying a code relating to the homepage to be displayed, and to request the functioning state of said electronic processor (26), so as to render the connection to said network secure and reliable and to prevent possible interference from outside.

10. Apparatus as in any claim hereinbefore, **characterized in that** the electronic cards (24) associated with said LED (23) are of the RX Mosfet type and allow to communicate data through an RS485 protocol between said processing unit (15) and the optical state of said LED (23), and can command them to switch on, off and/or adjust the luminous intensity thereof.

11. Apparatus as in any claim hereinbefore, **characterized in that** the electronic cards (24) of the buttons (25) are provided with digital inputs which convert the information from digital in RS485 protocol as emitted by said button (25) into RS232 protocol, so that said processing unit (15) can process the data and activate specific functions programmed.

12. Method for broadcasting information relating to a determinate geographical area or environment, which employs a bearing structure (11) and at least an information panel (12) mounted on said bearing structure (11) and on which at least a map (16, 17) is mounted, showing said geographical area or said environment, and a plurality of information sectors (19, 20, 21, 29) through which different information relating to determinate places of interest indicated on said map (16, 17) is broadcast in graphical and/or written and/or image form, **characterized in that** it comprises:
- a step in which a processing unit (15), mounted on said bearing structure (11) and connected both to said information sectors (19, 20, 21, 29), and also to a network (28) of processors, receives from said network (28), in a bidirectional way, a plurality of data relating to said places of interest, on each occasion shown and/or showable on said map (16, 17),
- a step in which said processing unit (15) processes said data in order to modify, in interactive mode, on each occasion, the information broadcast through said information sectors (19, 20, 21, 29) according to the data received, each of said place of interest being associated with a LED (23) commanded by means of specific electronic cards (24), wherein each of said LED (23) is associated with a relative button (25) for the rapid selection of points of interest, also connected to relative electronic cards (24), wherein the electronic cards (24) of the buttons (25) are transmission cards provided with digital inputs which convert the information from digital into a transmission protocol, so that said processing unit (15) can process the data and activate the specific functions programmed.
